# EUROPÄISCHE PATENTANMELDUNG

(11) **EP 3 805 891 A1**
(43) Veröffentlichungstag der Anmeldung: **14.04.2021**
(21) Anmeldenummer: 20200323.2
(22) Anmeldetag: 06.10.2020
(51) Int. Cl.: G05D 1/02

(54) **FAHRERLOSES TRANSPORTFAHRZEUG FÜR DIE INNERBETRIEBLICHE WARENLOGISTIK**

(30) Priorität: 07.10.2019 DE 102019215334
(71) Anmelder: W. Gessmann GmbH, 74211 Leingarten (DE)
(72) Erfinder: EGGENSPERGER, Martin, 74078 Heilbronn (DE); HERZIG, Andrew, 74226 Nordheim (DE); BACHMANN, Jonas, 74080 Heilbronn (DE); CRISTEA, Alexander, 74078 Heilbronn (DE); GSCHELAK, Matthias, 74193 Stetten (DE)
(74) Vertreter: Kohler Schmid Möbus Patentanwälte

(57) **Zusammenfassung**

Die Erfindung betrifft einen fahrerloses, d. h. autonom fahrendes Transportfahrzeug (10) für den bodengebundenen Transport von Transportgut (68), umfassend eine Ladezone (28) zur Aufnahme des Transportguts (68), eine Sensoreinrichtung (44) zur Ortung von und Abstandsmessung zu Hindernissen (64) in der Umgebung des Transportfahrzeugs (10), und eine Steuerungseinrichtung (38), mittels derer das Transportfahrzeug (10) auf Grundlage von durch die Sensoreinrichtung (44) bereitgestellten Sensordaten (74) mit einem definierten Sicherheitsabstand (62) an Hindernissen (64) vorbeinavigierbar ist. Der Sicherheitsabstand (62) ist in Abhängigkeit von einem konturseitigen räumlichen Überstand (66) des in der Ladezone (28) jeweilig angeordneten Transportguts (68) über das Transportfahrzeug (10) hinaus definierbar bzw. definiert. Die Ladezone (28) ist mit einer Waage (58) zum Bestimmen der Masse des in der Ladezone (28) angeordneten Transportguts (68) versehen und die Steuerungseinrichtung (38) ist dazu ausgebildet, den Sicherheitsabstand (62) und/oder eine maximale Fahrgeschwindigkeit Vmax des Transportfahrzeugs (10) an die Masse des jeweilig zu transportierenden Transportguts (68) anzupassen.

## Beschreibung

Die Erfindung betrifft ein fahrerloses Transportfahrzeug für die innerbetriebliche Warenlogistik sowie ein Steuerverfahren für ein solches Transportfahrzeug.

Fahrerlose, d.h. autonom fahrende, Transportfahrzeuge sind bei der innerbetrieblichen Warentransport, beispielsweise im Bereich der Produktionslogistik oder der Kommissionierung von Waren, fest etabliert. In der Praxis bewegen sich die fahrerlosen Transportfahrzeuge zunehmend in nicht dediziert den Transportfahrzeugen vorbehaltenen Bereichen, sondern müssen sich diese mit Menschen und anderen, mitunter an wechselnden räumlichen Positionen angeordneten, Hindernissen teilen. Hier besteht insoweit die Gefahr von unerwünschten Karambolagen sowie Sach- und Personenschäden.

Es ist deshalb die Aufgabe der vorliegenden Erfindung, ein nochmals sicherer und flexibler einsetzbares fahrerloses Transportfahrzeug bereitzustellen. Die das fahrerlose Transportfahrzeug betreffende Aufgabe wird erfindungsgemäß durch das in Anspruch 1 angegebene Transportfahrzeug gelöst. Weitere Vorteile der Erfindung ergeben sich aus der Beschreibung und der Zeichnung.

Das erfindungsgemäße fahrerlose Transportfahrzeug dient dem bodengebundenen Transport von Transportgut und umfasst eine Ladezone, in der das Transportgut angeordnet bzw. anordenbar ist, eine (bordeigene) Sensoreinrichtung zur Ortung von und Abstandsmessung zu Hindernissen in einer Umgebung des Transportfahrzeugs, d. h. in einem das Transportfahrzeug umgebenden räumlichen Überwachungsbereich der Sensoreinrichtung, und eine Steuerungseinrichtung, mittels derer das Transportfahrzeug auf Grundlage von durch die Sensoreinrichtung bereitgestellten Sensordaten mit einem definierten Sicherheitsabstand an Hindernissen vorbeinavigierbar ist. Erfindungsgemäß ist der Sicherheitsabstand in Abhängigkeit von einem konturseitigen räumlichen Überstand des jeweilig in der Ladezone angeordneten Transportguts über das Transportfahrzeug hinaus definiert. So ist mit zunehmendem Überstand des Transportguts über die Fahrzeugkontur (mitsamt deren Aufbauten) der Sicherheitsabstand entsprechend größer gewählt und umgekehrt. Das Transportfahrzeug kann damit in Abhängigkeit vom jeweiligen konturseitigen Überstand des Transportguts mit einem dynamisch veränderbaren und dem jeweiligen Bedarf entsprechenden Sicherheitsabstand zum Bestimmungs- bzw. Zielort navigieren. Das Transportfahrzeug bietet dadurch ein vergrößerte Betriebssicherheit, was unerwünschte Kollisionen des mit dem Transportgut beladenen Transportfahrzeugs mit statischen und auch mit bewegten Hindernissen, insbesondere Menschen, angeht. Dadurch kann das Transportfahrzeug selbst bei schwierig navigierbaren örtlichen Gegebenheiten als auch zum Transport von sperrigen und insbesondere fragilem Transportgut eingesetzt werden. Dies ist für die Einsatzbreite des Transportfahrzeugs von Vorteil. Die Ladezone ist mit einer Waage zum Bestimmen der Masse des in der Ladezone angeordneten Transportguts versehen, wobei die Steuerungseinrichtung dazu ausgebildet ist, den Sicherheitsabstand und/oder eine maximale Fahrgeschwindigkeit des Transportfahrzeugs an die Masse des jeweilig zu transportierenden Transportguts anzupassen. So kann die maximale Fahrgeschwindigkeit mit zunehmender Masse des Transportguts verkleinert werden und umgekehrt. Dadurch kann ein weiterer Sicherheitsgewinn beim Betriebseinsatz des Transportfahrzeugs erreicht werden.

Gemäß einer besonders bevorzugten Weiterbildung der Erfindung ist die (bordeigene) Sensoreinrichtung des Transportfahrzeugs dazu eingerichtet, den räumlichen Überstand des Transportguts messtechnisch zu erfassen. Die Sensoreinrichtung hat mithin eine Doppelfunktion. Es versteht sich, dass der außenkonturseitige Überstand des Transportguts über das Transportfahrzeug hinaus von der Sensoreinrichtung vorzugsweise in allen drei Raumrichtungen x, y, z erfasst werden kann.

Besonders bevorzugt ist die Sensoreinrichtung dazu eingerichtet, während der Fahrzeugbewegung, zumindest intervallweise oder auch kontinuierlich, den Überstand des Transportguts über die Außenkontur des Transportfahrzeugs (mitsamt dessen Aufbauten, wie beispielsweise einem Regal oder einer Transportbox) messtechnisch zu erfassen. Die Steuerungseinrichtung kann so den Sicherheitsabstand auf Basis der Sensordaten der Sensoreinrichtung ggf. auf einen vorgegebenen Mindest-Sicherheitsabstand des Transportfahrzeugs zu Hindernissen nachregeln. Dadurch kann während des Transports selbst bei einer unerwünschten Bewegung bzw. Lageveränderung des Transportguts relativ zum Transportfahrzeug eine unerwünschte Kollision des Transportguts mit einem Hindernis verhindert werden.

Die Sensoreinrichtung umfasst erfindungsgemäß bevorzugt Ultraschallsensoren, Radarsensoren, Laserscanner und/oder Kameras, insbesondere dreidimensional auflösende Kameras. Die Ultraschallsensoren sind nach der Erfindung vorzugswiese jeweils an einem Eckbereich des Gehäuses des Transportfahrzeugs angeordnet. Die Kameras bzw. 3D-Kameras sind demgegenüber vorzugsweise (in Fahrtrichtung) an einer Stirnfläche bzw. Vorderseite des Transportfahrzeugs, insbesondere in Richtung der Vertikalachse des Transportfahrzeugs übereinanderliegend, angeordnet.

Gemäß einer bevorzugten Ausführungsvariante der Erfindung umfasst die Sensoreinrichtung genau zwei oder genau drei 3D-Kameras. Zumindest eine der 3D-Kameras kann dabei bezogen auf die Vertikalachse des Trabsportfahrzeugs in ihrer Montagehöhe zu einer Ladefläche der Ladezone des Transportfahrzeugs fluchtend angeordnet sein. Der Erfassungsbereich zumindest einer der 3D-Kameras ist bevorzugt derart gewählt, dass durch diese 3D-Kamera ein außenkonturseitiger Überstand des Transportguts über das Transportfahrzeug hinaus sicher erfasst werden kann.

Nach einer Weiterbildung der Erfindung kann der außenkonturseitige Überstand des Transportguts alternativ oder zusätzlich auch manuell über ein am Transportfahrzeug fest angeordnetes Bedienfeld oder über ein mobiles Eingabemittel, das drahtlos mit der Steuerungseinrichtung des Transportfahrzeugs verbunden ist, insbesondere ein Computer wie etwa einen Tabletcomputer, in der Steuerungseinrichtung hinterlegbar sein. Dies ist besonders kostengünstig zu realisieren und erlaubt insbesondere bei sehr sperrigen oder nur bedingt durch die Sensoreinrichtung detektierbaren außenkonturseitigen Überständen des Transportguts über das Transortfahrzeug hinaus eine besonders sicheren Betrieb des Transportfahrzeugs. Es ist zu beachten, dass die Steuerungseinrichtung auch dazu programmiert sein kann, dass der von der Steuerungseinrichtung vorgegebene Sicherheitsabstand für das Navigieren des Transportfahrzeugs von einer Bedienperson manuell über die Eingabe am vorgenannten Eingabemittel bestätigt werden muss, bevor das Transportfahrzeug den Transport des Transportguts aufnimmt.

Das erfindungsgemäße Verfahren zum Steuern eines fahrerlosen Transportfahrzeugs für den bodengebundenen Transport von Transportgut zu einem vorgegebenen Bestimmungsort umfasst die folgenden Schritte:
a) Ermitteln eines außenkonturseitigen Überstands des in einer Ladezone des Transportfahrzeugs angeordneten Transportguts über das Transportfahrzeug hinaus;
b) Definieren eines Sicherheitsabstands des Transportsystems zu Hindernissen während des Navigierens des Transportfahrzeugs zum Bestimmungsort auf Grundlage des ermittelten außenkonturseitigen Überstandes des Transportguts;
c) Navigieren des Transportfahrzeugs zum Bestimmungsort unter Einhaltung des definierten Sicherheitsabstandes von Hindernissen.

Das Verfahren erlaubt einen nochmals sichereren autonomen Fahrbetrieb des Transportfahrzeugs, insbesondere in Bereichen, die auch von Menschen frequentiert werden.

Der außenkonturseitige Überstand des Transportguts wird erfindungsgemäß vorzugsweise mittels einer bordeigenen, d. h. am Fahrzeug montierten, Sensoreinrichtung des Transportfahrzeugs ermittelt, die zugleich zur Ortung von und Abstandsmessung zu Hindernissen in einem das Transportfahrzeug umgebenden räumlichen Überwachungsbereichs dient.

Der außenkonturseitige Überstand des Transportguts kann seitens einer Bedienperson über ein am Transportfahrzeug angeordnetes Eingabemittel, insbesondere einen Touch-Bildschirm, oder über einen Computer in der Steuerungseinrichtung hinterlegt, insbesondere abgespeichert, werden. Der Computer ist bevorzugt über eine drahtlose Kommunikationsschnittstelle mit der Steuerungseinrichtung des Transportfahrzeugs verbunden.

Nach einer ganz besonders bevorzugten Weiterbildung des erfindungsgemäßen Verfahrens wird die Masse des Transportguts bestimmt und der Sicherheitsabstand zusätzlich in Abhängigkeit von der Masse des Transportguts definiert.

Ebenso können die vorstehend genannten und die noch weiter ausgeführten Merkmale erfindungsgemäß jeweils einzeln für sich oder zu mehreren in beliebigen Kombinationen Verwendung finden.

Nachfolgend ist die Erfindung anhand eines in der Zeichnung wiedergegebenen Ausführungsbeispiels näher erläutert. Die gezeigte und beschriebene Ausführungsform ist nicht als abschließende Aufzählung zu verstehen, sondern hat für die Schilderung der Erfindung vielmehr beispielhaften Charakter.

In der Zeichnung zeigen:
- Fig. 1: ein erfindungsgemäßes Transportfahrzeug für den bodengebundenen und bevorzugt innerbetrieblichen Transport von Transportgut, in einer Vorderansicht;
- Fig. 2:: das Transportfahrzeug gemäß Fig. 1 in einer Rückansicht;
- Fig. 3:: eine schematisierte Darstellung des Transportfahrzeugs bei der Navigation durch einen mit Hindernissen versehenen Raum mit Darstellung eines Sicherheitsabstands zu Hindernissen, den das Transportfahrzeug beim autonomen Fahrbetrieb zu Hindernissen einhält, wobei der Sicherheitsabstand in Abhängigkeit vom Überstand des jeweilig zu transportierenden Ladegut bzw. Transportgut definiert ist; und
- Fig. 4: ein Blockschaltbild mit einzelnen Verfahrensschritten eines Verfahrens zum Steuern eines Transportfahrzeugs gemäß Fig. 1.

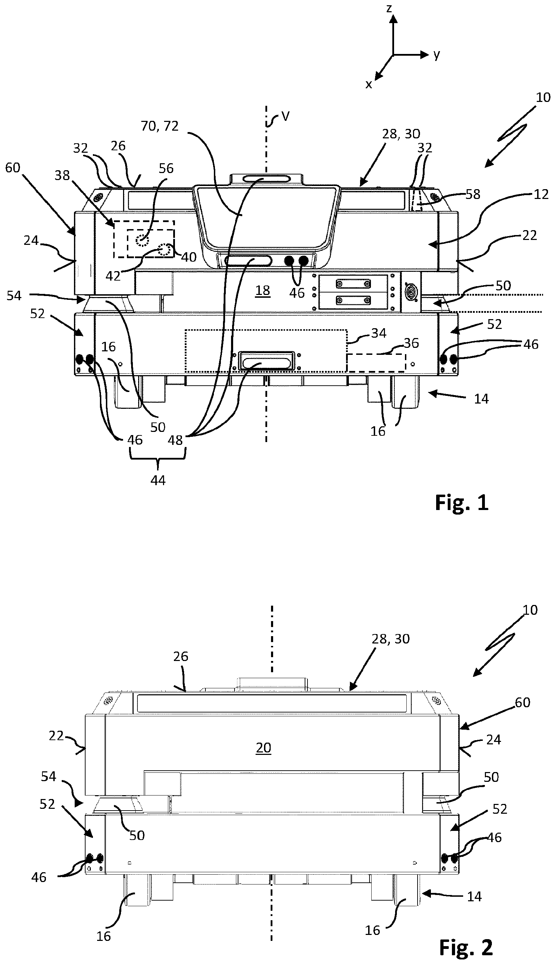

In den **Fign. 1** und **2** ist ein fahrerloses, d. h. vollständig autonom fahrendes, Transportfahrzeug **10** für den bodengebundenen Transport von Transportgut in einer Vorderansicht (Fig. 1) und in einer Rückansicht (Fig. 2) gezeigt. Das Transportfahrzeug 10 ist insbesondere im Bereich der innerbetrieblichen Waren- bzw. Produktionslogistik einsetzbar. Das Transportfahrzeug 10 weist ein Gehäuse **12** und ein Fahrwerk **14** mit mehreren Rädern **16** auf. Das Gehäuse 12 umfasst eine Vorderseite **18,** eine Rückseite **20** zwei einander gegenüberliegende Seitenwände **22, 24** und eine Gehäuseoberseite **26.** Die Gehäuseoberseite 26 dient im Bereich der Ladezone **28** des Transportfahrzeugs für das Transportgut als Ladefläche **30,** auf der das jeweilige Transportgut mittelbar oder unmittelbar angeordnet werden kann. Das Gehäuse 12 kann Kopplungselemente **32** aufweisen, um weitere Aufbauten, wie beispielsweise ein Regal oder eine Transportbox, am Transportfahrzeug 10 befestigen zu können. Das Gehäuse 12 ist vorzugsweise in Form eines ein- bzw. mehrteiligen Kunststoffspritzgussteils ausgeführt, kann aber auch aus Metall oder einem Verbundwerkstoff bestehen. Die Vertikalachse des Gehäuses 12 ist mit **Y** bezeichnet.

Als Fahrantrieb des Transportfahrzeugs 10 dient hier ein Elektromotor **34,** der elektrische Energie aus einer ladefähigen Traktionsbatterie **36** bezieht. Der Elektromotor 34 sowie auch die Traktionsbatterie 36 sind vorzugsweise im Gehäuse 12 angeordnet, um diese jeweils vor Beschädigung zu schützen.

Das Transportfahrzeug 10 ist vorliegend zur Navigation anhand von Umgebungsmerkmalen ausgelegt. Es verfügt über eine Steuerungseinrichtung **38** mit einem Bordcomputer **40** mit einer Steuerungssoftware **42.** Eine bordeigene Sensoreinrichtung **44** des Transportfahrzeugs 10 dient der Vermessung der jeweiligen räumlichen Umgebung des Transportfahrzeugs 10. Im Betriebseinsatz kann so die aktuelle Fahrzeugposition und Fahrtrichtung ohne zusätzliche und speziell für den Einsatz des Transportfahrzeugs 10 montierte Markierungen bzw. Hilfsmittel, gewonnen werden. Die Sensoreinrichtung 44 weist dazu geeignete Sensoren auf. Dies sind hier mehrere Ultraschallsensoren **46,** 3D-Kameras **48** und genau zwei Laserscanner **50.** Die Ultraschallsensoren 46 dienen einer präzisen Nahfeldvermessung der Umgebung des Transportfahrzeugs 10 und sind hier - jeweils paarweise - an allen vier Eckbereichen **52** des Gehäuses 12 angeordnet. Die beiden Laserscanner 50 sind - bezogen auf die Vertikalachse Y des Gehäuses 12, einander diametral oder im Wesentlichen diametral gegenüberliegend im Bereich der Eckbereiche 52 des Gehäuses 12 angeordnet. Zu beachten ist, dass die Laserscanner 50 in einer axialen Richtung beiderseitig vom Gehäuse 12 überdeckt sind in radialer Richtung (bezogen auf die Vertikalachse Y) nicht über die Außenkontur des Gehäuses 12 des Transportfahrzeugs 10 hervorstehen. Das Gehäuse 12 weist diesbezüglich eine umlaufende Nut **54** auf, in der die Laserscanner 50 angeordnet sind. Die 3D-Kameras 48 des Transportfahrzeugs sind hier beispielhaft an der Vorderseite 18 des Gehäuses 12, bevorzugt übereinanderliegend, angeordnet. Die obere der in den Fig. 1 gezeigten 3D-Kameras 48 ist in Richtung der Vertikalachse Y des Transportfahrzeugs 10 jeweils fluchtend oder annähernd fluchtend zur Ladefläche 30 der Ladezone 28 angeordnet.

Die mittels der Sensoreinrichtung 44 gewonnenen Sensordaten in Raumrichtungen x-, y-, z- sind mittels des Bordcomputers 40 und der Steuerungssoftware 42 analysierbar. Im Bordcomputer 40 ist weiterhin eine digitale Karte **56** der Einsatzumgebung abgespeichert. Mittels des Bordcomputers 40 und der Steuerungssoftware 42 sind die aktuell aufgenommenen Sensordaten der Sensoreinrichtung 44 mit der digitalen Karte 56 der Einsatzumgebung abgleichbar bzw. in dieser einordenbar. Die digitale Karte 56 kann in an sich bekannter Weise entweder vom Transportfahrzeug 10 selbst während einer Lern- oder Orientierungsfahrt automatisch erstellt oder auch durch eine manuelle Vermessung markanter Umgebungsmerkmale und eine geeignete Aufbereitung der auf diese Weise erhaltenen Sensordaten erzeugt sein. Die Steuerungssoftware 42 des Transportfahrzeugs 10 ist dazu eingerichtet, Veränderungen seiner Einsatzumgebung, insbesondere Hindernisse, beispielsweise in Form von Personen oder mobilen Gegenständen, als Abweichungen von der digitalen Karte 56 zu erkennen, bedarfsweise in die digitale Karte 56 nachträglich zu integrieren und weiterhin die jeweils aktuelle Fahrzeugposition, Fahrtrichtung sowie Fahrgeschwindigkeit zu ermitteln.

Der Ladezone des Transportfahrzeugs 10 kann eine Waage **58** zum Bestimmen der Masse des in der Ladezone 28 angeordneten Transportguts zugeordnet sein.

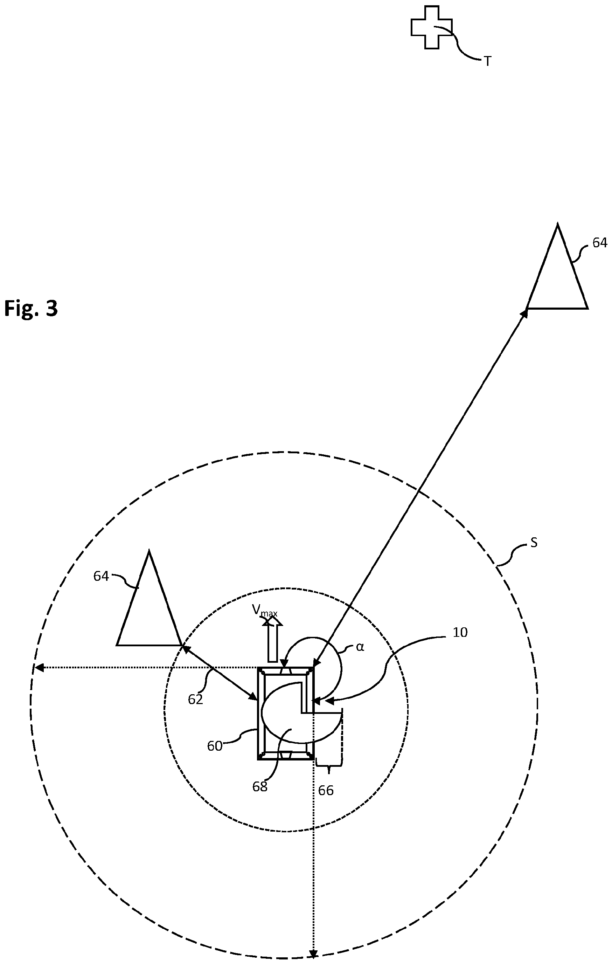

**Fig. 3** zeigt das beladene Transportfahrzeug 10 beim Navigieren zu einem Bestimmungsort **T.** Durch die umlaufende Nut 54 kann ein horizontaler Erfassungswinkel **a** des Scanfelds **S** des jeweiligen Laserscanners 50 von jeweils 270° oder nahezu 270° realisiert werden.

In der Praxis weisen die zu transportierenden Transportgüter häufig Abmessungen auf, die größer als die Grundfläche des Transportfahrzeugs 12 sind. Dadurch können sich diese unterschiedlich weit vom Transportfahrzeug 10 wegerstrecken und insbesondere in einer (bezogen auf die Vertikalachse Y) radialen Richtung über die Außenkontur **60** des Transportfahrzeugs 10 hervorstehen. Die Steuerungseinrichtung 38 ist deshalb dazu eingerichtet, das mit Transportgut 68 beladene Transportfahrzeug 10 mit einem in Fig. 3 gezeigten vorgegebenen Sicherheitsabstand **62** an Hindernissen **64** vorbei zu navigieren, der in Abhängigkeit von einem jeweiligen konturseitigen räumlichen Überstand **66** des in der Ladezone 28 angeordneten Transportguts **68** über das Transportfahrzeug 10 hinaus definierbar bzw. definiert ist. Die Steuereinrichtung 38 kann insbesondere dazu eingerichtet sein, den jeweiligen räumlichen Überstand 66 des Transportguts 68 anhand von Sensordaten der Sensoreinrichtung 44, hier insbesondere der 3D-Kameras 48, messtechnisch zu erfassen. Alternativ kann der außenkonturseitige Überstand 66 des Transportguts 68 auch manuell über ein Eingabemittel **70** am Transportfahrzeug 10 in der Steuerungseinrichtung 38 hinterlegbar sein. Das Eingabemittel 70 kann am Transportfahrzeug 10 fest verbaut und Beispiel in Form eines Anzeige- und Bedienfelds **72** oder in Form eines drahtlos mit der Steuerungseinrichtung 38 des Transportfahrzeugs 10 verbundenen Computers, insbesondere eines Tabletcomputers, ausgeführt sein.

Darüber hinaus ist die Steuerungseinrichtung 38 dazu ausgebildet, den Sicherheitsabstand 62 des Transportfahrzeugs und/oder die maximale Fahrgeschwindigkeit **Vₘₐₓ** an die Masse des jeweilig zu transportierenden Transportguts 68 anzupassen, d. h. die maximale Fahrgeschwindigkeit Vₘₐₓ des Transportfahrzeugs 10 mit zunehmender Masse des Transportguts 68 zu verringern und umgekehrt.

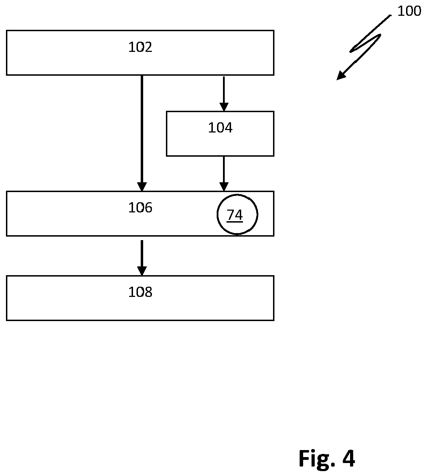

In **Fig. 4** ist ein Blockschaltbild mit einzelnen Verfahrensschritten eines Verfahrens **100** zum Steuern des vorstehend erläuterten fahrerlosen Transportfahrzeugs für den bodengebundenen Transport gezeigt.

Das erfindungsgemäße Verfahren 100 umfasst den Schritt Ermitteln **102** des außenkonturseitigen Überstands 66 des in einer Ladezone 28 des Transportfahrzeugs 10 angeordneten Transportguts 68 über das Transportfahrzeug 10 hinaus. Dies kann alleinig mittels der Steuereinrichtung 38 oder durch manuelle Eingabe seitens einer Bedienperson über ein Eingabemittel 70 (Fig. 1) in der Steuerungseinrichtung 38 hinterlegt, insbesondere im Bordcomputer 40 abgespeichert, werden.

In einem weiteren Schritt **104** kann die Masse des in der Ladezone 28 angeordneten Transportguts 68 bestimmt werden.

In einem weiteren Schritt **106** wird der Sicherheitsabstand 62 des Transportfahrzeugs 10 zu Hindernissen 64 während des Navigierens des Transportfahrzeugs 10 in Abhängigkeit von dem zuvor in Schritt 102 ermittelten Überstand 66 des Transportguts 68 definiert (und vorgegeben). Dies kann insbesondere auf Grundlage der von der Sensoreinrichtung 44 bereitgestellten Sensordaten 74 erfolgen. Sofern Schritt 104 ausgeführt wurde, kann der Sicherheitsabstand zusätzlich in Abhängigkeit von der zuvor bestimmten Masse des Transportguts 68 definiert werden.

Das Transportfahrzeug navigiert in einem darauffolgenden Schritt **108** autonom zum jeweiligen Bestimmungsort T (Fig. 3) unter Einhaltung des definierten Sicherheitsabstandes 62 zu Hindernissen.

Die Erfindung betrifft zusammenfasend einen fahrerloses, d. h. autonom fahrendes Transportfahrzeug 10 für den bodengebundenen Transport von Transportgut 68, umfassend eine Ladezone 28 zur Aufnahme des Transportguts 68, eine Sensoreinrichtung 44 zur Ortung von und Abstandsmessung zu Hindernissen 64 in der Umgebung des Transportfahrzeugs 10, und eine Steuerungseinrichtung 38, mittels derer das Transportfahrzeug 10 auf Grundlage von durch die Sensoreinrichtung 44 bereitgestellten Sensordaten 74 mit einem definierten Sicherheitsabstand 62 an Hindernissen 64 vorbeinavigierbar ist. Der Sicherheitsabstand 62 ist in Abhängigkeit von einem außenkonturseitigen räumlichen Überstand 66 des in der Ladezone 28 jeweilig angeordneten Transportguts 68 über das Transportfahrzeug 10 hinaus definierbar bzw. definiert. Weiterhin betrifft die Erfindung ein Verfahren zum Steuern des Transportfahrzeugs 10.

## Patentansprüche

1. Fahrerloses Transportfahrzeug (10) für den bodengebundenen Transport von Transportgut (68), umfassend
eine Ladezone (28) zur Aufnahme des Transportguts (68),
eine Sensoreinrichtung (44) zur Ortung von und Abstandsmessung zu Hindernissen (64) in der Umgebung des Transportfahrzeugs (10), und eine Steuerungseinrichtung (38) mittels derer das Transportfahrzeug (10) auf Grundlage von durch die Sensoreinrichtung (44) bereitgestellten Sensordaten (74) mit einem definierten Sicherheitsabstand (62) an Hindernissen (64) vorbeinavigierbar ist, wobei der Sicherheitsabstand (62) in Abhängigkeit von einem jeweiligen konturseitigen räumlichen Überstand (66) des in der Ladezone (28) angeordneten Transportguts (68) über das Transportfahrzeug (10) hinaus definierbar ist, **dadurch gekennzeichnet, dass** die Ladezone (28) mit einer Waage (58) zum Bestimmen der Masse des in der Ladezone (28) angeordneten Transportguts (68) versehen ist, und die Steuerungseinrichtung (38) dazu ausgebildet ist, den Sicherheitsabstand (62) und/oder eine maximale Fahrgeschwindigkeit Vmax des Transportfahrzeugs (10) an die Masse des jeweilig zu transportierenden Transportguts (68) anzupassen.

2. Transportfahrzeug (10) gemäß Anspruch 1, **dadurch gekennzeichnet, dass** die Sensoreinrichtung (44) dazu eingerichtet ist, den räumlichen Überstand (66) des Transportguts (68) messtechnisch zu erfassen.

3. Transportfahrzeug (10) gemäß Anspruch 1 oder 2, **dadurch gekennzeichnet, dass** die Sensoreinrichtung (44) Ultraschallsensoren (46), Laserscanner (50) und/oder Kameras, insbesondere 3D-Kameras (48), umfasst.

4. Transportfahrzeug (10) gemäß Anspruch 3, **dadurch gekennzeichnet, dass** die Sensoreinrichtung (44) genau zwei oder genau zwei Laserscanner (50) aufweist, die an einander gegenüberliegenden Eckbereichen 52 des Transportfahrzeugs (10) angeordnet sind.

5. Transportfahrzeug (10) gemäß einem der vorhergehenden Ansprüche, **dadurch gekennzeichnet, dass** der konturseitige Überstand (66) des Transportguts (68) manuell über ein am Transportfahrzeug (10) angeordnetes Eingabemittel (70) oder über ein drahtlos mit der Steuerungseinrichtung des Transportfahrzeugs (10) verbundenes Eingabemittel (70), insbesondere einen Computer, in der Steuerungseinrichtung (38) hinterlegbar ist.
